# EUROPEAN PATENT SPECIFICATION

(11) **EP 2 938 913 B1**
(45) Date of publication and mention of the grant of the patent: **11.04.2018**
(21) Application number: 13836256.1
(22) Date of filing: 12.12.2013
(51) Int. Cl.: F16L 11/08, F16L 11/127, F16L 11/22

(54) **UMBILICAL**
ZUFUHRLEITUNG
OMBILICAL

(30) Priority: 31.12.2012 GB 201223500
(43) Date of publication of application: 04.11.2015
(73) Proprietor: Technip France, 92400 Courbevoie (FR)
(72) Inventor: FRAZER, Steven, John, Newcastel Upon Tyne Tyne and Wear NE12 6LT (GB); MADDEN, David, League city, Texas 77573 (US)
(74) Representative: Murgitroyd & Company
(86) International application number: PCT/IB2013/002936
(87) International publication number: WO 2014/102597

(56) References cited:
- WO-A1-2012/172290

## Description

The present invention relates to an offshore hydrocarbon-production umbilical, and in particular to an IWOCS umbilical, and to a method of manufacture.

Umbilicals used in the offshore production of hydrocarbons generally comprise a group of one or more types of elongated active umbilical components, such as electrical cables, optical fibre cables, steel pipes and/or hoses, cabled together for flexibility, over-sheathed and, when applicable, armoured for mechanical strength. Umbilicals are typically used for transmitting power, signals and/or working fluids (for example for fluid injection, hydraulic power, gas release, etc.) to and from a subsea installation.

The umbilical cross-section is generally circular, the elongated elements being wound together either in a helical or in a S/Z pattern. In order to fill the interstitial voids between the various umbilical elements and to obtain the desired configuration, filler components may be included within the voids.

API 17E and ISO 13628-5 "Specification for Subsea Umbilicals", provide standards for the design and manufacture of such umbilicals.

Subsea umbilicals are now being installed at increasingly deeper water depths, commonly being deeper than 2000m. Such umbilicals therefore have to be able to withstand the increasingly severe loading conditions during their installation and their service life.

A particular use of such umbilicals is in an 'Installation and WorkOver Control System' (hereinafter "IWOCS"). The IWOCS is used to monitor and control the deployment and operation of subsea production equipment such as subsea trees. The same system is also used for the retrieval and work of such equipment. IWOCS generally offers monitoring and control of the deployment and retrieval of tubing hangers, landing strings and subsea trees, as well as facilities for downhole operations, well testing and production testing.

An IWOCS umbilical is general able to connect the subsea equipment to a 'top side' control unit, which typically has a reel and/or winch to deploy the umbilical, a workover control container, and local control panels on the rig.

IWOCS umbilicals can be designed to include as many hydraulic connections as requested by the designer or operator for operation of the necessary hydraulic and electrical control functions, and to provide monitoring and testing during installation, intervention and workover of subsea completion equipment.

In particular, IWOCS umbilicals are usually desired to be easy to install and recover with a simple winch/reel arrangement. During their operation and use, they are often reeled on and off drums many times, and subject to highly dynamic environments. As a consequence, IWOCS umbilicals need to be a light weight, flexible (i.e. with a low bending stiffness), and highly resistant to tensile and bending loadings.

The main load carrying components in charge of withstanding the tensile loads due to the suspended weight of the umbilical below a laying ship are usually tubes (see for example as described in US6472614, WO93/17176, GB2316990), steel rods (US6472614), composite rods (WO2005/124095, US2007/0251694), steel ropes (GB2326177, WO2005/124095), composites ropes (GB2326177), or tensile armour layers (see for example Figure 1 of US6472614). The other components in the umbilical, i.e. the electrical and optical cables, the thermoplastic hoses, the polymeric external sheath and the polymeric filler components, do not contribute significantly to the tensile strength of the umbilical.

Under severe conditions, such as use in deep water and/or in dynamic applications, increased loads will be applied to the umbilical due to the weight of the umbilical and to the dynamic movement of water. Thus, strengthening elements and ballast elements have been added to umbilicals to withstand these loads. In particular, API specification 17E suggests adding external layers of armouring wires wound helically around the umbilical.

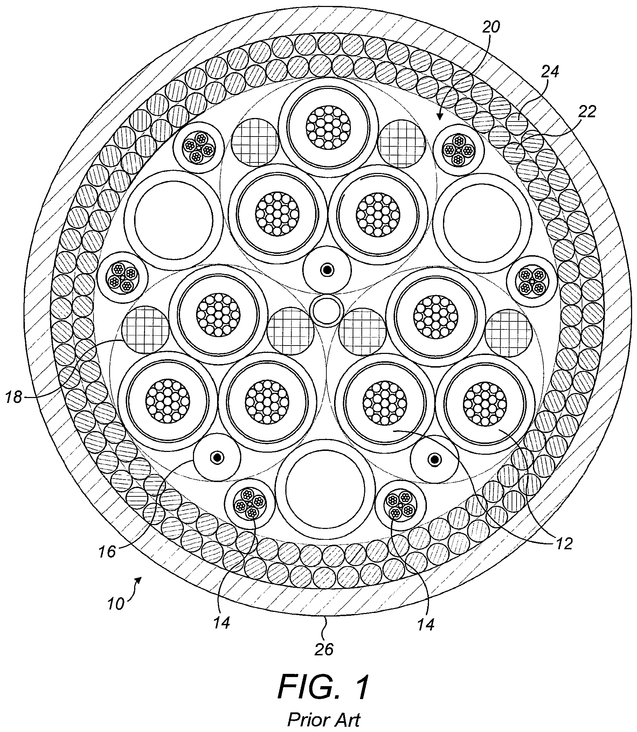

Figure 1 of the accompanying drawings is a cross-sectional view of a conventional umbilical 10 for use in the offshore production of hydrocarbons. It includes three large power conductors, each having three electrical power cables 12, electrical signal cables 14, optical fibre cables 16, reinforcing steel or carbon rods 18, etc., optionally with a filler thereinbetween, and which together form a core 20. Around the core 20 are two cross-wound tensile armour layers 22, 24 comprising a large number of galvanized cylindrical steel wires in a manner known in the art; see for example the armouring wires 12 in US 6472624. The armour layers 22, 24 are then surrounded by an outer sheath 26. WO 2012/172290A shows a similar umbilical using at least two fibre reinforcement layers formed of a number of fibre yarns laid to run in side by side fashion along the outside of an inner thermoplastic layer.

Whilst the steel wire armour layers 22 and 24 can provide additional strength and ballast, they naturally increase the overall weight of the umbilical. As the water depth increases and/or the dynamic activity increases, the suspended weight also increases, until a limit is reached at which the umbilical is not able to support its own suspended weight.

It is known to provide armour layers based on using non-steel or non-metal wires or ropes, such as woven or non-woven aramid fibres braided at low angles. Such fibres can provide 'rope like' strength whilst being a lot lighter than steel. However, this arrangement has at least three known problems.

Firstly, this arrangement is expensive to manufacture in large diameter as large diameter braiding machines are not a 'standard' design, and so need to be especially developed. Even the addition of the large number of steel wires as shown in Figure 1 herewith is expensive because of the need to use large size armouring machines in order to manage the large number of steel wires at the same time.

Secondly, as the umbilicals are reeled on and off drums, and subject to other dynamic environments, flexing of the umbilicals causes the braids to move, and continuous flexing eventually causes the braids to degrade at the "contact points" or "knuckles".

In addition, as such umbilicals are spooled on and off a drum, the load within the tensile member causes a downward force into the belly of the drum, and in some cases causes the fibre-based strength members, such as aramid braided ropes, to move through the bundle, damaging the adjacent component. This is known as the 'cheese wiring' effect.

It is an object of the present invention to provide an umbilical with improved strength, able to withstand repeated flexing, whilst also having an easy method of manufacture.

Thus, according to one aspect of the present invention, there is provided an offshore hydrocarbon-production umbilical comprising concentrically:
an outer sheath,
at least two cross-wound armouring layers, and
a core enclosed by the armouring layers, and comprising a plurality of elongate active umbilical components,
characterized in that each armouring layer comprises a plurality of reinforced polymer strips, which form a complete annulus around the core as an armouring layer.

The use of reinforced polymer strips to form the armouring layers achieves a reduced weight but still flexible arrangement, which is significantly easier to manufacture as far fewer strips are required to form the armouring layers compared with the large number of steel wires shown in Figure 1. In particular, the winding of the armouring layers can be carried out with small 'standard' winding machines, leading to a cost reduction compared with prior art armouring manufacturing steps.

Optionally, the use of a plurality of reinforced polymer strips provides an umbilical which has a low bending stiffness, such as below 1200Nm. This can be contrasted with the use of round armor wires such as shown in Figure 1 of the accompanying drawings, where each layer would provide a bending stiffness of 800 Nm or more, making an overall bending stiffness of at least 1600 Nm; or the use of braiding, which in itself has a low bending stiffness, but which itself must be sandwiched between sheaths having a bending stiffness that can be over 1200 Nm for a typical IWOCS of 90mm to 140mm OD.

Measurements of the bending stiffness (that can be formed around the required radius of the guiding sheaths by hand and self weight (typical radius of 1-2m)) of two counter helical layers of reinforced polymer strips of the present invention have been in the range from 93Nm to 259Nm, and the use of two armouring layers formed by reinforced polymer strips of the present invention has been found to increase the stiffness of a single layer by only 20-30%, rather than simply doubling the bending stiffness.

The polymer strips may have their reinforcement provided by any suitable arrangement, generally involving the use of one or more strength-bearing pieces or units along the length of the polymer strips, and optionally embedded therein.

The reinforcement can be provided in a symmetrical or unsymmetrical manner, or a combination of same, and generally in one or more arrays, such arrays optionally being geometric, regular and/or parallel. The strands may be separate or touching. The possible separation of the strands within each reinforced polymer strip further removes the risk of their degradation from wear against each other during the umbilical service life and handling, in contrast to the steel wires in Figure 1 herewith.

In a preferred embodiment, the at least two cross-wound armouring layers comprise the same number of the same or similar reinforced polymer strips. This embodiment is easy to manufacture, and is torque-balanced, or at least torque-balanced as far as possible.

The present invention could also be implemented using different reinforced polymer strips for each armouring layer, or in at least two different armouring layers, and/or a different number of reinforced polymer strips in each armouring layer, or in at least two different cross-wound armouring layers: provided that the resulting umbilical structure is torque-balanced, or at least torque-balanced as far as possible. For example, the reinforced polymer strips of two armouring layers could have different widths and/or different thicknesses and/or a different number of yarns and/or different kind of yarns (e.g. different materials, different number of fibres per yarn, etc.).

Optionally, the polymer strips are reinforced by one or more strands of one or more high strength organic yarns, optionally having a tensile modulus >70 GPa.

Optionally, the high strength organic yarns comprise fibres comprising one or more of the group comprising: aromatic polyamide (aramid) fibre, aromatic polyester fibre, liquid crystal fibre, high performance polyethylene fibre, and aromatic heterocyclic polymer fibre (PBO); preferably aromatic heterocyclic polymer fibre (PBO).

The or each strand may comprise any number of yarns. A plurality of yarns may form be twisted or braided or otherwise 'wound' together, being for example being at least 5 or at least 10 yarns, optionally in the range of 10-200, such as about 40 or 50 or 60 yarns. Forming strands of yarns is well known in the art, and can be contrasted with 'solid' strength members generally formed of a single solid material, or formed of fibres needed to be conjoined by a resin or other adhesive to form a "substantially solid" single entity to provide enough strength.

Preferably, the yarns are formed from aromatic heterocyclic polymer fibre (PBO).

In this regard, typical tensile strengths values for certain materials able to be used are:

| Material | Tensile Strength (MPa) | Tensile Modulus (GPa) | Specific Tensile Strength (Nm/kg) |
|---|---|---|---|
| Liquid crystal fibre - Vectran | 2900 | 103 | 2.07 x 10⁶ |
| Aramid fibre - Technora (Available from Teijin) | 3440 | 79 | 2.47 x 10⁶ |
| Aramid fibre - Kevlar 49 (from DuPont) or Twaron D2200 (from Teijin) | 3600 | 102 to 110 | 2.5 x 10⁶ |
| High Performance Polyethylene fibre - Dyneema | 2620 | 107 | 2.70 x 10⁶ |
| Aromatic Heterocyclic Polymer fibre PBO - Zylon® | 5500 | 180 | 3.52 x 10⁶ |
| High Performance Polyethylene fibre - Spectra | 3510 | 270 | 3.62 x 10⁶ |

Such suitable high strength organic fibre formed yarns are light, and have high strength and high modulus strength, and include various high strength low stretch synthetic fibre strands made with either Zylon® fibre or aramid fibres, such as Kelvar or Twaron high modulus fibre, or liquid crystal fibre, such as Vectra fibre, or other high strength and high modulus synthetic fibres.

Kelvar fibres, such as K-29 and high modulus K-49 fibres are known.

The Twaron and Technora para-aramids also offer a combination of properties such as high strength, low weight, and high modulus (similar to Kelvar, such as Kevlar 49). Due to this combination of properties, the aramids fibres are used in protective garments. Twaron D2200 fibre is a particularly high modulus fibre (110-115 GPa) compared with normal standard aramid fibres. The aramid fibres have high strength and high modulus, good chemical and hydrolysis resistance, high temperature resistance, no corrosion, good dimensional stability, are non-magnetic and non-conductive, and light in weight.

Vectran is a high-performance thermoplastic multifilament yarn spun from Vectra® liquid crystal polymer (LCP). The fibre has high strength and modulus; excellent creep resistance and abrasion resistance; low moisture absorption and coefficient of thermal expansion (CTE) and high impact resistance.

The Zylon® fibre is a trade name of Poly (p-phenylene-2, 6-benzobisoxazole) (PBO) fibre which is a rigid-rod isotropic crystal polymer. It has a strength and modulus almost double that of some para-aramid fibres. The PBO molecule is generally synthesized by condensing 4, 6-diamino-1, 3-benzenediol dihydrochloride with terephthalic acid (TA) or a derivative of TA such as terephthaloyl chloride in a polyphosphoric acid (PPA) solution. "Zylon" is a registered trademark of Toyobo Co. Ltd. in Japan.

The Handbook of composites by Georges Lubin et al (1998) defines 'aramid fibre' as the generic term for a specific type of 'aromatic polyamide fibre'. It states that the US Federal Trade Commission defines an aramid fibre as "a manufactured fibre in which the fibre-forming substance is a long-chain synthetic polyamide in which at least 85% of the amide linkages are attached directly to two aromatic rings". Thus, in an aramid, most of the amide groups are directly connected to two aromatic rings, with nothing else intervening.

Generally, the reinforced polymer strips have a regular elongate cross section, and a length that is suitable in the forming process of the umbilical. The reinforced polymer strips may be provided in a pre-formed or shaped manner, whilst preferably being sufficiently flexible to allow their shape to be adapted to fit annularly around the core during manufacture of the umbilical.

The reinforced polymer strips may have any suitable dimensions and cross-section. Generally, the reinforced polymer strips have a rectangular cross-section.

Preferably, the reinforced polymer strips of one armouring layer overlap with the reinforced polymer strips of another armouring layer.

The use of reinforced polymer strips, generally having an elongate cross section, and optionally being 'flat', also increases the surface contact between the polymer strips of each armouring layer compared with individual cylindrical steel wires as shown in Figure 1 herewith. The increased surface contact between the reinforced polymer strips reduces the pressure contact therebetween, and thus reduces the associated wear that occurs due to the moving of the armouring layers in use, especially whilst being reeled on and off drums.

Optionally, the reinforced polymer strips comprise one or more strands of one or more yarns embedded in a polymer matrix. The polymer of the polymer matrix may be any suitable high strength polymer, generally able to be formed (such as extruded, particularly pressure extruded), around the strands during manufacture of the reinforced polymer strips. Such polymers include high, medium and low density polyethylene, polyamide (nylon) and polyurethane.

The manufacturing process may involve any suitable steps or processes, generally intending to embed the strands within a curable matrix. By way of example, the required number of strands can be located on a spooling creel such that their ends can then be fed individually through tensioning devices into a die which arranges the strands into the desired internal arrangement, such as equally spaced parallel lines. The strands can then be fed through an extruder with a curing polymer extruded thereover to bind the strands into a thin rectangular strip.

Optionally, each reinforced polymer strip comprises at least two strands, optionally at least 4-20 strands, optionally in the range 4-12 strands, such as 6, 7, 8, 9 or 10 strands.

The reinforced polymer strips are provided to achieve a circular or annular array around the core of the umbilical, optionally in a symmetrical or otherwise balanced arrangement. Optionally, the reinforced polymer strips are formed with dimensions adapted for the known or expected diameter of the core.

In one embodiment of the present invention, each armouring layer comprises between 5-25 reinforced polymer strips, optionally between 8-20 or 9-16 reinforced polymer strips. The present invention is flexible with regard to the number of strips required, based upon the known or expected diameter of the core, thickness of the strips, etc.

By way of example only, the reinforced polymer strips may have a thickness in the range 1mm to 5mm, preferably in the range 1.5mm to 3mm, and a width in the range 10mm to 50mm, preferably in the range 15mm to 30mm.

The strength of the reinforced polymer strips will vary depending upon the number of strands and yarns, the number and type of fibres forming the yarns, as well as the width or thickness of the strip. By way of example only, the yarns can have a fibre density of the range of 660 to 24,000 tex, giving the reinforced polymer strips a tensile load capacity in the range 1300 N to 20,000 N.

As mentioned above, an umbilical may consist of a group of one or more types of elongated active umbilical components, including but not limited to electrical cables, optical fibre cables, steel tubes, hoses, steel rods, composite rods, steel ropes and composite ropes, cabled together for flexibility. At least some of these elongated components form a core. In the present invention, the core may comprise at least an outer layer of a number of umbilical components.

The outer sheath may be made from any suitable material, generally being formed from one or more polymers, able to be formed around the armouring layers to provide an external protective layer, and optionally also a smooth layer.

The offshore hydrogen-production umbilical may be a thermoplastic, hybrid, HFL, IWOCS or power cable, preferably an IWOCS umbilical.

Optionally, the umbilical is for use at a depth of greater than 2000m, preferably greater than 3000m.

According to a second embodiment of the present invention, there is provided an IWOCS umbilical comprising consecutively:
an outer sheath,
at least two cross-wound armouring layers, and
a core enclosed by the armouring layers, and comprising a plurality of elongate active umbilical components,
characterized in that each armouring layer comprises a plurality of reinforced polymer strips as defined herein before in the form of a complete annulus around the core..

The advantages of this IWOCS umbilical are described hereinabove.

According to a third aspect of the present invention, there is provided a method of manufacturing an offshore umbilical as defined herein before comprising at least the steps of:
(i) providing a core of comprising a plurality of elongate active umbilical components;
(ii) winding at least two armouring layers as defined herein before around the core to form a complete annulus around the core as an armouring layer; and
(iii) providing an oversheath.

As mentioned above, the winding of two armouring layers can be carried out with small 'standard' winding machines, leading to a cost reduction compared with the manufacturing steps required in the prior art to add conventional armouring. Indeed, the number of components required to form each armouring layer is now much lower than in the prior art, because the reinforced polymer strips are much wider than the prior art wires. Furthermore, the reinforced polymer strips are significantly more flexible than prior art wires, especially steel wires. Thus, the strips can be easily reeled off drums and wound around a cylindrical bundle during umbilical manufacture without requiring large and powerful machines, (as required for equivalent steel components).

The two armouring layers could be wound with a helix angle with an absolute value of between 5° and 25°, preferably between 5° and 10°. The two armouring layers are preferably cross-wound, and more preferably laid with opposite angles. For example a first armouring layer is laid at +12° and a second armouring layer is laid at -12°. This makes the offshore umbilical more torque-balanced, i.e. less likely to rotate when a tensile axial load is applied to it.

According to a fourth aspect of the present invention, there is provided a reinforced polymer strip for use in an offshore hydrocarbon-production umbilical, especially an IWOCS umbilical, wherein the polymer strip is reinforced by one or more strands of one or more high strength organic yarns comprising fibres comprising one or more of the group comprising; aromatic polyamide (aramid) fibre, aromatic polyester fibre, liquid crystal fibre, high performance polyethylene fibre, and aromatic heterocyclic polymer fibre (PBO), preferably aromatic heterocyclic polymer fibre (PBO).

Such strips significantly reduce the weight required to provide the armouring effect, whilst still providing a flexible arrangement, and provide a significantly easier method of umbilical manufacture as far fewer strips are required to form the armouring layers compared with the large number of steel wires shown in Figure 1.

Embodiments of the present invention will now be described by way of example only and with reference to the accompanying drawings in which:
Figure 1 is a cross-sectional view of an umbilical according to the prior art;
Figure 2 is a cross-sectional view of an umbilical according to one embodiment of the present invention; and
Figure 3 is a cross-sectional view of a portion of a reinforced polymer strip according to another embodiment of the present invention.

Referring to the drawings, Figure 1 shows an umbilical 10 for use in the offshore production of hydrocarbons. It includes three large power conductors, each having three electrical power cables 12, electrical signal cables 14, optical fiber cables 16, reinforcing steel or carbon rods 18, etc., optionally with a filler thereinbetween, and which together form a core 20.

Around the core 20 are two cross-wound tensile armour layers 22, 24 comprising a large number of galvanized cylindrical steel wires in a manner known in the art. The armour layers 22, 24 are then surrounded by an outer sheath 26.

Whilst the steel wire armour layers 22 and 24 can provide additional strength and ballast, they naturally increase the overall weight of the umbilical. As the water depth increases and/or the dynamic activity increases, the suspended weight also increases, until a limit is reached at which the umbilical is not able to support its own suspended weight.

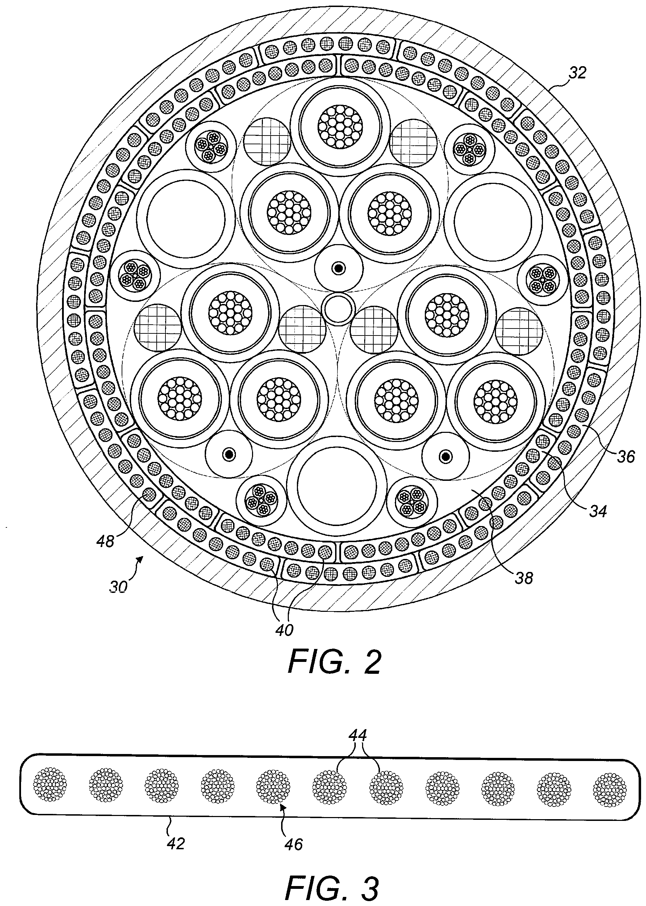

Figure 2 shows an offshore hydrocarbon-production umbilical 30 comprising concentrically an outer sheath 32, first and second cross-wound armouring layers 34, 36, and a core 38 enclosed by the armouring layers 34, 36, and comprising a plurality of elongate active umbilical components. The umbilical 30 is characterized in that each armouring layer 34, 36 comprises a plurality of reinforced polymer strips 40.

The core 38 of the umbilical 30 comprises various umbilical components as described hereinbefore, and optionally a number being the same as those described in relation to the umbilical 10 shown in Figure 1.

Similarly, the outer sheath 32 comprises a polymer, which can be same or different as the outer sheath 26 shown for the first umbilical 10 in Figure 1.

Figure 3 shows a reinforced polymer strip 42 for use in an offshore hydrocarbon-production umbilical such as the umbilical 30 shown in Figure 2, wherein the polymer strip 42 is reinforced by one or more strands 46 of one or more high strength organic yarns 44. Figure 3 shows the polymer strip 42 being reinforced by 11 strands 46, each strand 46 being formed of approximately 50 high strength organic yarns 44.

The yarns comprise fibres such as those described herein. A particular example of a suitable fibre is aramid fibres. The number and sizes of aramid fibres and yarns within a reinforced polymer strip will vary depending upon the required tensile strength of the strip. These could be in the range of 660 tex to 4000 tex fibre-based yarns. This would give a reinforced polymer strip a fibre tex range of 600 tex to 24,000 tex.

The reinforced polymer strip 42 can be formed by providing the required yarns onto a spooling creel, the ends of which are then fed individually through tensioning devices and into a ceramic closing die which arranges the yarns into an equally spaced, horizontal line. The yarns are then fed parallel through a cross head extruder and polymer is then pressure extruded over the yarns, binding them into a thin rectangular strip.

By placing the strands/yarns into a polymer strip there is no further contact with other strands, removing the risk of degradation from wear, both during the umbilical service life and handling during manufacture. This avoids the strands wearing due to their contact.

This arrangement also provides a number of strands in a single 'piece' (in the form of the strip), such that significantly fewer 'pieces' are required to form an annular armouring layer around the core of an umbilical, compared with the large number of steel wires as shown in Figure 1. In particular, there is possibly at least a three-fold, five-fold or even ten-fold reduction in the number of 'pieces' required in Figure 2 to form each armouring layer 34, 36, compared with the number of steel wires 22, 24 shown in figure 1. This provides a clear manufacturing advantage by removing the need for large braiding machines having many multiple individual feeding lines required to form the armouring layers 22, 24 in Figure 1. Instead only a few feeding lines are required to provide the components to be wound around the core of an umbilical of the present invention. The reinforced polymer strips 40, 42, as they are also flexible, can still be reeled off drums and wound around a cylindirical bundle without requiring much larger or complex powerful machines for the armouring layers 22, 24 shown in Figure 1.

Meanwhile, the provision of the two cross-wound armouring layers 34, 36 shown in Figure 2 also still provides a torque-balanced arrangement of the armouring layers, which have no risk of unwinding, and a very stable construction.

Figure 2 shows a first armouring layer 34 comprising 12 reinforced polymer strips 40, each reinforced polymer strip 40 comprising seven strands 48 in a parallel array or configuration. Figure 2 shows the second armouring layer 36 comprising the same number of reinforced polymer strips 40, having the same number of reinforcing strands 48.

As mentioned above, the present invention is particularly suitable for forming an IWOCS umbilical, as the present invention can provide an umbilical with a low bending stiffness and be very resilient to tensile bending dynamic loadings (being the fatigue issue), whilst being easy to manufacture without requiring the use of expensive machines.

Optionally, the two armouring layers 34, 36 shown in Figure 2 are counter-helically wound around the core 38 at a low angle, and optionally with one or more retaining tapes placed between the armouring layers 34, 36 to assist their cohesion in use.

## Claims

1. An offshore hydrocarbon-production umbilical (30) comprising concentrically:
an outer sheath (32),
at least two cross-wound armouring layers (34, 36), and
a core (38) enclosed by the armouring layers, and comprising a plurality of elongate active umbilical components,
**characterized in that** each armouring layer comprises a plurality of reinforced polymer strips (40, 42), which form a complete annulus around the core as an armouring layer.

2. An umbilical (30) as claimed in claim 1 wherein the umbilical has a bending stiffness below 1200 Nm.

3. An umbilical (30) as claimed in claim 1 or claim 2 wherein the polymer strips (40, 42) are reinforced by one or more strands (46, 48) of one or more high strength organic yarns (44) having a tensile modulus >70 GPa.

4. An umbilical (30) as claimed in claim 3 wherein the high strength organic yarns (44) comprise fibres comprising one or more of the group comprising; aromatic polyamide (aramid) fibre, aromatic polyester fibre, liquid crystal fibre, high performance polyethylene fibre, and aromatic heterocyclic polymer fibre (PBO), or a combination thereof.

5. An umbilical (30) as claimed in claim 4 wherein the high strength organic fibres comprise aromatic heterocyclic polymer fibre (PBO).

6. An umbilical (30) as claimed in any one of the preceding claims wherein each reinforced polymer strip (40, 42) comprises at least two strands (46, 48), optionally at least 4-20 strands, and preferably in the range of 4-12 strands.

7. An umbilical (30) as claimed in claim 6 wherein each reinforced polymer strip (40, 42) comprises 6, 7, 8, 9 or 10 strands (46, 48).

8. An umbilical (30) as claimed in any one of the preceding claims wherein each armouring layer (32, 34) comprises between 5-25 reinforced polymer strips (40, 42), optionally between 8-20 or between 9-18 reinforced polymer strips.

9. An umbilical (30) as claimed in any one of the preceding claims wherein the reinforced polymer strips (40, 42) have a thickness in the range 1mm to 5mm, and a width in the range 10 mm to 50 mm.

10. An umbilical (30) as claimed in any one of the preceding claims wherein the reinforced polymer strips (40, 42) have a tensile load capacity in the range 1300 N to 20,000 N.

11. An umbilical (30) as claimed in any preceding claim wherein the reinforced polymer strips (40, 42) are wound in a helical pattern.

12. An umbilical (30) as claimed in any preceding claim wherein the umbilical is a thermoplastic, hybrid, HFL, IWOCS or power cable, preferably an IWOCS umbilical.

13. An umbilical (30) as claimed in any one of the preceding claims for use at a depth of greater than 2000 m.

14. An Installation and WorkOver Control System (IWOCS) umbilical comprising consecutively:
an outer sheath,
at least two cross-wound armouring layers, and
a core enclosed by the armouring layers, and comprising a plurality of elongate active umbilical components,
**characterized in that** each armouring layer comprises a plurality of reinforced polymer strips as defined in any one of claims 1-13 in the form of a complete annulus around the core.

15. A method of manufacturing an offshore umbilical (30) as defined in any one of claims 1 to 14 comprising at least the steps of:
(i) providing a core (38) comprising a plurality of elongate active umbilical components;
(ii) winding at least two armouring layers (34, 36) as defined in any one of claims 1 to 13 around the core to form a complete annulus around the core; and
(iii) providing an oversheath (32).

## Patentansprüche

1. Eine Offshore-Zufuhrleitung zur Kohlenwasserstoff-Produktion (30), die konzentrisch Folgendes beinhaltet:
eine äußere Hülle (32),
mindestens zwei gekreuzte Armierungsschichten (34, 36), und
einen Kern (38), der durch die Armierungsschichten umschlossen wird und eine Vielzahl von länglichen aktiven Zufuhrleitungskomponenten beinhaltet,
**dadurch gekennzeichnet, dass** jede Armierungsschicht eine Vielzahl von verstärkten Polymerstreifen (40, 42) beinhaltet, die einen vollständigen Ringraum um den Kern als eine Armierungsschicht bilden.

2. Zufuhrleitung (30) gemäß Anspruch 1, wobei die Zufuhrleitung eine Biegesteifigkeit unter 1200 Nm aufweist.

3. Zufuhrleitung (30) gemäß Anspruch 1 oder Anspruch 2, wobei die Polymerstreifen (40, 42) durch einen oder mehrere Stränge (46, 48) von einem oder mehreren hochfesten organischen Garnen (44) mit einem Zugmodul > 70 GPa verstärkt werden.

4. Zufuhrleitung (30) gemäß Anspruch 3, wobei die hochfesten organischen Garne (44) Fasern beinhalten, die eines oder mehrere der Gruppe beinhalten, die Folgendes beinhaltet: aromatische Polyamid-(Aramid-)faser, aromatische Polyesterfaser, Flüssigkristallfaser, Hochleistungspolyethylenfaser und aromatische heterocyclische Polymerfaser (PBO), oder eine Kombination davon.

5. Zufuhrleitung (30) gemäß Anspruch 4, wobei die hochfesten organischen Fasern eine aromatische heterocyclische Polymerfaser (PBO) beinhalten.

6. Zufuhrleitung (30) gemäß einem der vorhergehenden Ansprüche, wobei jeder verstärkte Polymerstreifen (40, 42) mindestens zwei Stränge (46, 48), optional mindestens 4-20 Stränge und vorzugsweise im Bereich von 4-12 Strängen beinhaltet.

7. Zufuhrleitung (30) gemäß Anspruch 6, wobei jeder verstärkte Polymerstreifen (40, 42) 6, 7, 8, 9 oder 10 Stränge (46, 48) beinhaltet.

8. Zufuhrleitung (30) gemäß einem der vorhergehenden Ansprüche, wobei jede Armierungsschicht (32, 34) zwischen 5-25 verstärkte Polymerstreifen (40, 42), optional zwischen 8-20 oder zwischen 9-18 verstärkte Polymerstreifen beinhaltet.

9. Zufuhrleitung (30) gemäß einem der vorhergehenden Ansprüche, wobei die verstärkten Polymerstreifen (40, 42) eine Dicke im Bereich von 1 mm bis 5 mm und eine Breite im Bereich von 10 mm bis 50 mm aufweisen.

10. Zufuhrleitung (30) gemäß einem der vorhergehenden Ansprüche, wobei die verstärkten Polymerstreifen (40, 42) eine Zugbelastbarkeit im Bereich von 1300 N bis 20 000 N aufweisen.

11. Zufuhrleitung (30) gemäß einem der vorhergehenden Ansprüche, wobei die verstärkten Polymerstreifen (40, 42) in einem spiralförmigen Muster gewickelt sind.

12. Zufuhrleitung (30) gemäß einem der vorhergehenden Ansprüche, wobei die Zufuhrleitung eine thermoplastische, Hybrid-, HFL-, IWOCS- oder Netzleitung, vorzugsweise eine IWOCS-Zufuhrleitung, ist.

13. Zufuhrleitung (30) gemäß einem der vorhergehenden Ansprüche zur Verwendung bei einer Tiefe von mehr als 2000 m.

14. Eine IWOCS-Zufuhrleitung (Installation und WorkOver Control System), die konsekutiv Folgendes beinhaltet:
eine äußere Hülle,
mindestens zwei gekreuzte Armierungsschichten, und
einen Kern, der durch die Armierungsschichten umschlossen wird und eine Vielzahl von länglichen aktiven Zufuhrleitungskomponenten beinhaltet,
**dadurch gekennzeichnet, dass** jede Armierungsschicht eine Vielzahl von verstärkten Polymerstreifen, wie in einem der Ansprüche 1-13 definiert, in der Form eines vollständigen Ringraums um den Kern beinhaltet.

15. Ein Verfahren zur Herstellung einer Offshore-Zufuhrleitung (30) wie in einem der Ansprüche 1 bis 14 definiert, das mindestens die folgenden Schritte beinhaltet:
(i) Bereitstellen eines Kerns (38), der eine Vielzahl von länglichen aktiven Zufuhrleitungskomponenten beinhaltet;
(ii) Wickeln von mindestens zwei Armierungsschichten (34, 36), wie in einem der Ansprüche 1 bis 13 definiert, um den Kern, um einen vollständigen Ringraum um den Kern zu bilden; und
(iii) Bereitstellen einer Außenhülle (32).

## Revendications

1. Un ombilical de production d'hydrocarbure en mer (30) comprenant de manière concentrique :
une gaine externe (32),
au moins deux couches de blindage enroulées de manière croisée (34, 36), et
un coeur (38) entouré par les couches de blindage, et comprenant une pluralité de composants d'ombilical actifs allongés,
**caractérisé en ce que** chaque couche de blindage comprend une pluralité de bandes de polymère renforcées (40, 42), lesquelles forment un espace annulaire complet autour du coeur en tant que couche de blindage.

2. Un ombilical (30) tel que revendiqué dans la revendication 1, l'ombilical ayant une rigidité au pliage en dessous de 1 200 Nm.

3. Un ombilical (30) tel que revendiqué dans la revendication 1 ou la revendication 2 dans lequel les bandes de polymère (40, 42) sont renforcées par un ou plusieurs brins (46, 48) d'un ou de plusieurs fils organiques de force élevée (44) ayant un module de traction > 70 GPa.

4. Un ombilical (30) tel que revendiqué dans la revendication 3 dans lequel les fils organiques de force élevée (44) comprennent des fibres comprenant un ou plusieurs éléments du groupe comprenant : une fibre (aramide) de polyamide aromatique, une fibre de polyester aromatique, une fibre à cristaux liquides, une fibre de polyéthylène de performance élevée, et une fibre de polymère hétérocyclique aromatique (PBO), ou une combinaison de celles-ci.

5. Un ombilical (30) tel que revendiqué dans la revendication 4 dans lequel les fibres organiques de force élevée comprennent une fibre de polymère hétérocyclique aromatique (PBO).

6. Un ombilical (30) tel que revendiqué dans l'une quelconque des revendications précédentes dans lequel chaque bande de polymère renforcée (40, 42) comprend au moins deux brins (46, 48), facultativement au moins de 4 à 20 brins, et de préférence dans la gamme allant de 4 à 12 brins.

7. Un ombilical (30) tel que revendiqué dans la revendication 6 dans lequel chaque bande de polymère renforcée (40, 42) comprend 6, 7, 8, 9 ou 10 brins (46, 48).

8. Un ombilical (30) tel que revendiqué dans l'une quelconque des revendications précédentes dans lequel chaque couche de blindage (32, 34) comprend entre 5 et 25 bandes de polymère renforcées (40, 42), facultativement entre 8 et 20 ou entre 9 et 18 bandes de polymère renforcées.

9. Un ombilical (30) tel que revendiqué dans l'une quelconque des revendications précédentes dans lequel les bandes de polymère renforcées (40, 42) ont une épaisseur comprise dans la gamme allant de 1 mm à 5 mm, et une largeur comprise dans la gamme allant de 10 mm à 50 mm.

10. Un ombilical (30) tel que revendiqué dans l'une quelconque des revendications précédentes dans lequel les bandes de polymère renforcées (40, 42) ont une capacité d'effort de tension comprise dans la gamme allant de 1 300 N à 20 000 N.

11. Un ombilical (30) tel que revendiqué dans n'importe quelle revendication précédente dans lequel les bandes de polymère renforcées (40, 42) sont enroulées selon un motif hélicoïdal.

12. Un ombilical (30) tel que revendiqué dans n'importe quelle revendication précédente, l'ombilical étant un ombilical thermoplastique, hybride, HFL, IWOCS ou de câble électrique, de préférence un ombilical IWOCS.

13. Un ombilical (30) tel que revendiqué dans l'une quelconque des revendications précédentes destiné à être utilisé à une profondeur supérieure à 2 000 m.

14. Un ombilical de système de contrôle d'installation et de reconditionnement (IWOCS) comprenant de manière consécutive :
une gaine externe,
au moins deux couches de blindage enroulées de manière croisée, et
un coeur entouré par les couches de blindage, et comprenant une pluralité de composants d'ombilical actifs allongés,
**caractérisé en ce que** chaque couche de blindage comprend une pluralité de bandes de polymère renforcées telles que définies dans l'une quelconque des revendications 1 à 13 sous la forme d'un espace annulaire complet autour du coeur.

15. Une méthode de fabrication d'un ombilical (30) en mer tel que défini dans l'une quelconque des revendications 1 à 14 comprenant au moins les étapes consistant :
(i) à fournir un coeur (38) comprenant une pluralité de composants d'ombilical actifs allongés ;
(ii) à enrouler au moins deux couches de blindage (34, 36) telles que définies dans l'une quelconque des revendications 1 à 13 autour du coeur afin de former un espace annulaire complet autour du coeur ; et
(iii) à fournir une sur-gaine (32).
